# DEMANDE DE BREVET EUROPEEN

(11) **EP 1 323 968 A1**
(43) Date de publication de la demande: **02.07.2003**
(21) Numéro de dépôt: 01870286.0
(22) Date de dépôt: 21.12.2001
(51) Int. Cl.: F16K 31/524, F16K 1/12

(54) **Vanne de précision et actionneur pour ladite vanne**

(71) Demandeur: Techspace Aero S.A., 4041 Herstal (BE)
(72) Inventeur: Delobel, Pierre, 4031 Angleur (BE)
(74) Mandataire: Van Malderen, Joelle

(57) **Abrégé**

La présente invention se rapporte à une vanne (9) destinée à être placée dans un conduit d'écoulement (14), comprenant un obturateur (4) commandé par un actionneur (11), caractérisée en ce que l'actionneur comprend : (i) une vis (1) capable de tourner autour de son axe (A) sous l'action de moyens de commande (7) extérieurs à la vanne, (ii) une butée (2) solidaire de ladite vis (1) de manière à tourner autour de l'axe (A) de la vis (1) lorsque la vis (1) tourne autour de son axe (A), et (iii) des moyens (3,6) de transformation/transmission disposés entre ladite butée (2) et ledit obturateur (4), lesdits moyens (3,6) étant capables de transformer le mouvement de rotation de la butée (2) autour de l'axe (A) de la vis (1) en un mouvement de translation le long dudit axe (A) et de transmettre ledit mouvement de translation à l'obturateur (4) de manière à le déplacer le long de l'axe (B) du conduit d'écoulement (14) d'une position fermée à une position d'ouverture minimale dite "position de pré-ouverture", ladite position de pré-ouverture correspondant à une amplitude minimale de l'écoulement du fluide dans le conduit d'écoulement (14) en position vanne fermée.

## Description

### Objet de l'invention

La présente invention se rapporte à une vanne de précision à obturateur, telle qu'une vanne à boisseau ou une vanne à clapet, commandée par un actionneur.

### Etat de 1a technique

Beaucoup d'équipements utilisés dans l'aéronautique et dans l'aérospatial sont des systèmes pneumatiques ou hydrauliques utilisant des vannes telles que des vannes à clapet ou des vannes à boisseau.

Les vannes à boisseau sphérique comprennent essentiellement un corps de vanne dans lequel un obturateur (boisseau) se présentant sous la forme d'une calotte sphérique munie d'un passage est actionné. Habituellement, un joint est fixé de manière rigide sur le support éventuellement mobile à l'arrière ou à l'avant du boisseau et permet d'assurer ainsi l'étanchéité de l'amont de la vanne vis-à-vis de l'aval de celle-ci lorsque la vanne est fermée. Lors de la fermeture de la vanne, le joint entre en contact avec ladite surface de contact sphérique du boisseau.

Les vannes à clapet comprennent quant à elles un clapet servant d'obturateur et se présentant essentiellement sous la forme d'un plateau mobile, ledit plateau étant muni d'un joint d'étanchéité sur sa face active et étant capable de venir s'appuyer sur un siège qui coopère avec le clapet. Le joint solidaire du plateau y est fixé de manière rigide. Comme pour les vannes à boisseau, ce joint permet d'assurer l'étanchéité de l'amont de la vanne vis-à-vis de l'aval de celle-ci lors de la fermeture de la vanne.

Lorsque la vanne est intégrée dans l'installation où elle doit fonctionner, il est parfois nécessaire de pouvoir régler avec précision la course de l'obturateur par rapport au conduit d'écoulement en vue d'obtenir une régulation aussi fine que possible du débit du fluide en aval de la vanne, selon les besoins.

Ce réglage est particulièrement difficile à réaliser pour des vannes dont l'actionneur est intégré dans le conduit d'écoulement, notamment pour des vannes à clapet dont l'actionneur est inaccessible selon l'axe de l'obturateur.

La solution habituellement proposée pour effectuer ce réglage consiste à démonter certains éléments de la vanne, mais cette solution est peu satisfaisante et il serait de loin préférable de pouvoir disposer d'une vanne dont la course de l'obturateur commandée par l'actionneur puisse être réglée en continu.

### Buts de l'invention

La présente invention vise à fournir une vanne à obturateur, qui ne présente pas les inconvénients de l'état de la technique.

Plus précisément, la présente invention vise à fournir une vanne dont l'actionneur permet un réglage en continu de l'ouverture minimale de l'obturateur.

La présente invention vise en particulier à fournir une vanne dont l'actionneur permet de déplacer l'obturateur d'une position fermée à une position d'ouverture minimale à l'intérieur d'un conduit d'écoulement.

La présente invention vise en outre à fournir un actionneur pour vanne qui permet une grande précision de réglage tout en étant relativement simple d'utilisation.

### Résumé de l'invention

La présente invention se rapporte à une vanne destinée à être placée dans un conduit d'écoulement, comprenant un obturateur commandé par un actionneur, caractérisée en ce que l'actionneur comprend : (i) une vis capable de tourner autour de son axe sous l'action de moyens de commande extérieurs à la vanne, (ii) une butée solidaire de ladite vis de manière à tourner autour de l'axe de la vis lorsque la vis tourne autour de son axe, et (iii) des moyens de transformation/transmission de mouvement disposés entre ladite butée et ledit obturateur, lesdits moyens étant capables de transformer le mouvement de rotation de la butée autour de l'axe de la vis en un mouvement de translation le long dudit axe et de transmettre ledit mouvement de translation à l'obturateur de manière à le déplacer le long de l'axe du conduit d'écoulement d'une position fermée à une position d'ouverture minimale dite "position de pré-ouverture", ladite position de pré-ouverture correspondant à une amplitude minimale de l'écoulement du fluide dans le conduit d'écoulement en position vanne fermée.

De manière avantageuse, les moyens de transformation/transmission de mouvement comprennent une pièce coulissante et un ressort, ledit ressort étant capable de maintenir en permanence en appui la pièce coulissante sur la butée au niveau d'une surface de contact.

De préférence, au niveau de la surface de contact entre la butée et la pièce coulissante, la butée et la pièce coulissante sont obliques.

De manière particulièrement préférée, la pièce coulissante est configurée de façon telle qu'elle traverse ladite vis et elle présente un passage.

Avantageusement, la vis est arrangée dans le conduit d'écoulement transversalement par rapport à l'axe du conduit d'écoulement.

La présente invention se rapporte en outre à un actionneur pour vanne à obturateur, comprenant (i) une vis capable de tourner autour de son axe sous l'action de moyens de commande extérieurs à la vanne, (ii) une butée solidaire de ladite vis de manière à tourner autour de l'axe de la vis lorsque la vis tourne autour de son axe, et (iii) des moyens de transformation/transmission disposés entre ladite butée et ledit obturateur, lesdits moyens étant capables de transformer le mouvement de rotation de la butée autour de l'axe de la vis en un mouvement de rotation en un mouvement de translation le long dudit axe et de transmettre ledit mouvement de translation à l'obturateur de manière à le déplacer le long de l'axe du conduit d'écoulement d'une position fermée à une position d'ouverture minimale dite "position de pré-ouverture", ladite position de pré-ouverture correspondant à une amplitude minimale de l'écoulement du fluide dans le conduit d'écoulement de transmettre ledit mouvement de translation à l'obturateur de manière à le déplacer le long de l'axe du conduit d'écoulement d'une position fermée à une position d'ouverture minimale dite "position de pré-ouverture", ladite position de pré-ouverture correspondant à une amplitude minimale de l'écoulement du fluide dans le conduit d'écoulement en position vanne fermée.

De manière avantageuse, les moyens de transformation/transmission comprennent une pièce coulissante et un ressort, ledit ressort étant capable de maintenir en permanence en appui la pièce coulissante sur la butée au niveau d'une surface de contact.

De préférence, au niveau de la surface de contact entre la butée et la pièce coulissante, la butée et la pièce coulissante sont obliques, ladite pièce coulissante étant pourvue d'un passage par lequel elle traverse la vis.

La présente invention concerne également un procédé pour régler avec précision le déplacement d'un obturateur de vanne à l'intérieur d'un conduit d'écoulement, d'une position initiale fermée à une position finale de pré-ouverture de l'obturateur correspondant à une position d'ouverture minimale, ledit procédé utilisant la vanne ou l'actionneur de la présente invention, et étant caractérisé en ce qu'il comprend les étapes suivantes :
- on détermine l'amplitude et le sens du mouvement axial le long de l'axe du conduit d'écoulement à imposer à l'obturateur;
- en fonction de cette amplitude et de ce sens, on fait tourner la vis autour de son axe d'un certain angle à l'aide des moyens de commande;
- sous l'effet combiné de cette rotation de la vis et de la présence des moyens de transformation/transmission de mouvement, la butée est animée d'un mouvement de translation le long de l'axe de la vis;
- ledit mouvement de la butée entraîne un déplacement axial des moyens de transformation/transmission de mouvement le long de l'axe du conduit d'écoulement, et
- ce déplacement entraîne à son tour un déplacement et un positionnement de l'obturateur en position de pré-ouverture, le long du conduit d'écoulement.

Enfin, l'invention se rapporte à l'utilisation de la vanne et de l'actionneur selon la présente invention dans le domaine de l'aéronautique ou spatial.

### Brève description des figures

La figure 1 représente une vue générale en coupe d'une vanne selon l'invention disposée dans un conduit d'écoulement.

La figure 2 représente une vue détaillée en coupe de l'actionneur selon la présente invention.

### Description d'une forme préférée d'exécution de l'invention

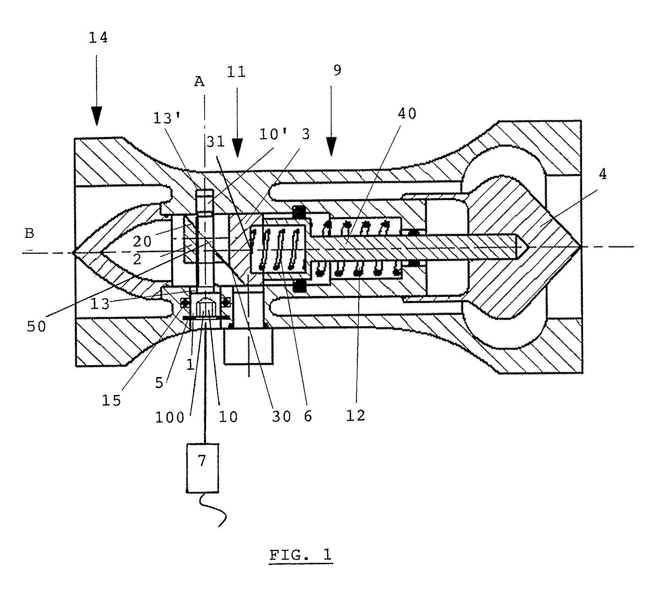

L'exemple choisi pour illustrer la présente invention est celui d'une vanne à clapet telle qu'illustrée à la figure 1. On notera cependant que le dispositif selon l'invention peut être aisément transposé au cas d'une vanne à boisseau.

La vanne à clapet 9 est disposée dans un conduit d'écoulement 14 et comprend un obturateur 4 servant de clapet et muni d'une tige de commande 40, et un actionneur 11. De manière tout à fait classique, un ressort 12 est placé le long de la tige 40 de commande.

L'actionneur 11 comprend ici une vis 1 disposée transversalement par rapport à l'axe B du conduit d'écoulement, ledit conduit d'écoulement étant pourvu de cavités 13, 13' dans lesquelles viennent se loger les extrémités respectivement 10 et 10' de la vis 1. Un circlips 5 coince l'extrémité 10 de la vis 1 dans la cavité 13 du conduit d'écoulement, un joint 15 assure l'étanchéité de la tête de vis 100 dans la vanne.

De préférence, la vis 1 est en appui sur le conduit d'écoulement, au niveau de ses extrémités 10 (tête de vis) et 10' (corps fileté) de manière à limiter ses déformations lorsque l'obturateur 4 vient en contact.

Sur l'axe A de la vis 1 est montée une butée 2 qui est solidaire de la vis 1 et présente une face inclinée 20. La vis 1 est reliée à des moyens de commande 7 extérieurs à la vanne 9 et représentés ici de façon schématique.

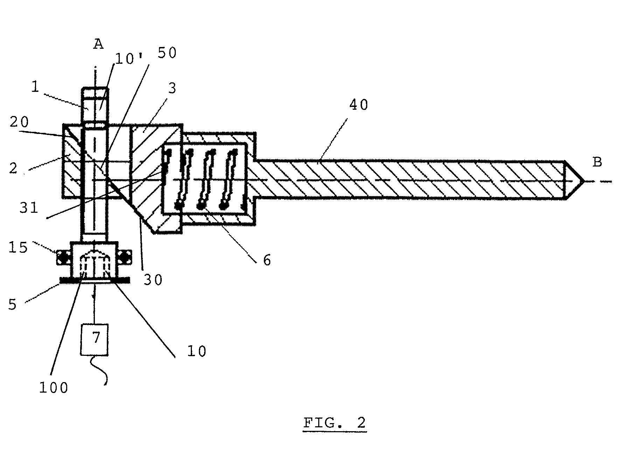

L'actionneur 11 comprend en outre une pièce coulissante 3 et un ressort 6, ainsi que détaillé à la figure 2.

La pièce coulissante 3 est pourvue d'un passage pour traverser la vis 1. En fait, la pièce coulissante 3 est fendue au niveau de la vis 1 pour permettre son déplacement axial avec une grande amplitude.

En outre, la pièce coulissante 3 présente une première zone de contact qui est une zone de contact inclinée 30 par laquelle elle peut s'appuyer par complémentarité sur la zone de contact inclinée 20 de la butée 2 au niveau d'une surface de contact 50.

La pièce coulissante 3 présente également une deuxième zone 31 de contact par laquelle elle entre en contact avec le ressort 6, au niveau de la partie supérieure dudit ressort 6.

Le ressort 6 est donc en contact par sa partie supérieure avec la pièce coulissante 3. Par ailleurs, le ressort 6 est en contact, par sa partie inférieure cette fois, avec la tige de commande 40 de l'obturateur 4.

On notera que le ressort 6 est conçu et positionné au niveau de la vanne de façon à maintenir en permanence la pièce coulissante 3 en appui sur la butée 2 au niveau de la surface de contact 50.

De manière générale, les matériaux des différents éléments de la vanne sont choisis de manière à assurer une bonne rigidité mécanique et à être compatibles avec les conditions d'utilisation des vannes. Le matériau de la butée 2 sera également choisi pour limiter les frottements vis-à-vis de la vis 1 et de la pièce 3, afin de faciliter les réglages. Ainsi, dans le domaine spatial, la vis 1, la pièce coulissante 3, la tige 40 et le ressort 6 sont avantageusement en acier inoxydable, tandis que la butée 2 est avantageusement en alliage de bronze.

Concrètement, lorsque l'on souhaite actionner la vanne 9 au moyen de l'actionneur 11 et déplacer l'obturateur 4 d'une position initiale à une position finale, on procède de la façon suivante :
(i) on imprime à la vis 1, à l'aide des moyens de commande 7, un mouvement de rotation autour de son axe A selon un certain angle qui est fonction des positions initiale et finale de l'obturateur 4;
(ii) la butée 2, solidaire de la vis 1, a tendance à effectuer un mouvement de rotation, mais une rainure dans la pièce 3 localise la butée 2 et prévient sa rotation lorsque la vis 1 tourne et ce mouvement de rotation est transformé par la présence de la pièce coulissante 3 et du ressort 6 en un mouvement de translation le long de l'axe A de la vis 1;
(iii) sous l'effet du déplacement de la butée 2, la pièce 3 coulisse et subit un mouvement de translation le long de l'axe B du conduit d'écoulement, et
(iv) ce mouvement de translation est transmis à l'obturateur 4 via la tige de commande 40.

Le mouvement de translation de l'obturateur 4 obtenu correspond à un déplacement de l'obturateur, selon ce que l'on souhaite, soit vers l'amont, soit vers l'aval du conduit d'écoulement, mais dans tous les cas ce déplacement est très faible, c'est-à-dire de quelques dizaines de millimètres au plus.

L'avantage d'un tel dispositif est qu'il permet d'actionner une vanne au moyen d'un actionneur qui est intégré dans le conduit d'écoulement, donc *a priori* difficilement accessible.

Le réglage de la position de l'obturateur 4 obtenu grâce à ce dispositif est très fin puisque le fait de tourner la vis de 1 tour permet de déplacer l'obturateur de 1 millimètre et donc d'obtenir un débit plus ou moins important du fluide d'écoulement en fonction des caractéristiques générales de la vanne 9.

La présente invention se caractérise donc par la possibilité de régler un mouvement linéaire de l'obturateur de la vanne via la rotation d'un élément actionneur, tel qu'une vis, la course de l'obturateur étant accessible sans avoir à démonter les tuyauteries ou une partie de la vanne.

La présente invention présente encore les différents avantages suivants :
- simplicité de réalisation,
- facilité de réglage de la vanne,
- bonne rigidité de l'ensemble assurant une bonne précision de réglage,
- possibilité de bloquer la vis de réglage par différents moyens si la vanne est soumise à des vibrations,
- possibilité de fonctionner dans une gamme de températures très large, suivant les matériaux utilisés.

## Revendications

1. Vanne (9) destinée à être placée dans un conduit d'écoulement (14), comprenant un obturateur (4) commandé par un actionneur (11), **caractérisée en ce que** l'actionneur comprend : (i) une vis (1) capable de tourner autour de son axe (A) sous l'action de moyens de commande (7) extérieurs à la vanne, (ii) une butée (2) solidaire de ladite vis (1) de manière à tourner autour de l'axe (A) de la vis (1) lorsque la vis (1) tourne autour de son axe (A), et (iii) des moyens (3,6) de transformation/transmission de mouvement disposés entre ladite butée (2) et ledit obturateur (4), lesdits moyens (3,6) étant capables de transformer le mouvement de rotation de la butée (2) autour de l'axe (A) de la vis (1) en un mouvement de translation le long dudit axe (A) et de transmettre ledit mouvement de translation à l'obturateur (4) de manière à le déplacer le long de l'axe (B) du conduit d'écoulement (14) d'une position fermée à une position d'ouverture minimale dite "position de pré-ouverture", ladite position de pré-ouverture correspondant à une amplitude minimale de l'écoulement du fluide dans le conduit d'écoulement (14) en position vanne fermée.

2. Vanne selon la revendication 1, **caractérisée en ce que** lesdits moyens (3,6) de transformation/transmission de mouvement comprennent une pièce coulissante (3) et un ressort (6), ledit ressort (6) étant capable de maintenir en permanence en appui la pièce coulissante (3) sur la butée (2) au niveau d'une surface de contact (50).

3. Vanne selon la revendication 2, **caractérisée en ce que**, au niveau de la surface de contact (50) entre la butée (2) et la pièce coulissante (3), la butée (2) et la pièce coulissante sont obliques.

4. Vanne selon l'une des revendications 1 à 3, **caractérisée en ce que** la pièce coulissante (3) est configurée de façon telle qu'elle traverse ladite vis (1).

5. Vanne selon l'une des revendications précédentes, **caractérisée en ce que** la vis (1) est arrangée dans le conduit d'écoulement transversalement (A) par rapport à l'axe (B) du conduit d'écoulement (14).

6. Actionneur pour vanne à obturateur (4), comprenant (i) une vis (1) capable de tourner autour de son axe (A) sous l'action de moyens de commande (7) extérieurs à la vanne, (ii) une butée (2) solidaire de ladite vis (1) de manière à tourner autour de l'axe (A) de la vis (1) lorsque la vis (1) tourne autour de son axe (A), et (iii) des moyens (3,6) de transformation/transmission de mouvement disposés entre ladite butée (2) et ledit obturateur (4), lesdits moyens (3,6) étant capables de transformer le mouvement de rotation de la butée (2) autour de l'axe de la vis (1) en un mouvement de rotation en un mouvement de translation le long dudit axe (A) et de transmettre ledit mouvement de translation à l'obturateur (4) de manière à le déplacer le long de l'axe (B) du conduit d'écoulement (14) d'une position fermée à une position d'ouverture minimale dite "position de pré-ouverture", ladite position de pré-ouverture correspondant à une amplitude minimale de l'écoulement du fluide dans le conduit d'écoulement (14) en position vanne fermée.

7. Actionneur selon la revendication 6, **caractérisé en ce que** lesdits moyens (3,6) de transformation/transmission comprennent une pièce coulissante (3) et un ressort (6), ledit ressort (6) étant capable de maintenir en permanence en appui la pièce coulissante (3) sur la butée (2) au niveau d'une surface de contact (50).

8. Actionneur selon la revendication 7, **caractérisé en ce que**, au niveau de la surface de contact (50) entre la butée (2) et la pièce coulissante (3), la butée (2) et la pièce coulissante (3) sont obliques, ladite pièce coulissante (3) étant pourvue d'un passage par lequel elle traverse la vis (1).

9. Procédé pour régler avec précision le déplacement d'un obturateur (4) de vanne à l'intérieur d'un conduit d'écoulement (14), d'une position initiale fermée à une position finale de pré-ouverture de l'obturateur (4) correspondant à une position d'ouverture minimale, ledit procédé utilisant la vanne (9) selon l'une des revendications 1 à 5 ou l'actionneur (11) selon l'une des revendications 6 à 8, et étant **caractérisé en ce qu'**il comprend les étapes suivantes :
- on détermine l'amplitude et le sens du mouvement axial le long de l'axe du conduit d'écoulement à imposer à l'obturateur (4);
- en fonction de cette amplitude et de ce sens, on fait tourner la vis (1) autour de son axe (A) d'un certain angle à l'aide des moyens de commande (7) ;
- sous l'effet combiné de cette rotation de la vis (1) et de la présence des moyens (3,6) de transformation/transmission, la butée (2) est animée d'un mouvement de translation le long de l'axe (A) de la vis (1);
- ledit mouvement de la butée (2) entraîne un déplacement axial des moyens (3,6) de transformation/transmission le long de l'axe (B) du conduit d'écoulement (14), et
- ce déplacement entraîne à son tour un déplacement et un positionnement de l'obturateur (4) en position de préouverture, le long du conduit d'écoulement (14).

10. Utilisation de la vanne selon l'une des revendications 1 à 5, ou de l'actionneur selon l'une des revendications 6 à 8 dans le domaine de l'aéronautique ou spatial.
